# EUROPÄISCHE PATENTSCHRIFT

(11) **EP 3 435 043 B1**
(45) Veröffentlichungstag und Bekanntmachung des Hinweises auf die Patenterteilung: **29.04.2020**
(21) Anmeldenummer: 17183047.4
(22) Anmeldetag: 25.07.2017
(51) Int. Cl.: G01F 23/284, G01F 23/288, G01F 23/292, G01F 23/296, G01S 13/88, G01S 7/292, G01F 25/00

(54) **RADAR-FÜLLSTANDMESSGERÄT, VERFAHREN UND PROGRAMMELEMENT ZUM BETREIBEN EINES RADAR-FÜLLSTANDMESSGERÄTS**
RADAR FILL LEVEL MEASURING DEVICE, METHOD AND PROGRAM ITEM FOR OPERATING A RADAR FILL LEVEL MEASURING DEVICE
JAUGE RADAR, PROCÉDÉ ET ÉLÉMENTS DE PROGRAMME POUR FAIRE FONCTIONNER UN JAUGE RADAR

(43) Veröffentlichungstag der Anmeldung: 30.01.2019
(73) Patentinhaber: VEGA Grieshaber KG, 77709 Wolfach (DE)
(72) Erfinder: HOFERER, Christian, 77652 Offenburg (DE); BENZ, Joachim, 77756 Hausach (DE); DECK, Thomas, 77709 Wolfach (DE); FRANZ, Johannes, 77749 Hohberg (DE); GAISER, Martin, 72275 Alpirsbach (DE); GRIEßBAUM, Karl, 77796 Mühlenbach (DE); HAAS, Jürgen, 77709 Oberwolfach (DE); ISENMANN, Andreas, 77716 Haslach (DE); KAUFMANN, Manuel, 77791 Berghaupten (DE); MOTZER, Jürgen, 77723 Gengenbach (DE); SCHULTHEISS, Daniel, 78132 Hornberg (DE); WELLE, Roland, 77756 Hausach (DE)
(74) Vertreter: Maiwald Patent- und Rechtsanwaltsgesellschaft mbH

(56) Entgegenhaltungen:
- WO-A1-03/016835
- DE-A1-102006 034 554
- DE-A1-102013 109 606
- US-A1- 2007 101 810

## Beschreibung

### Gebiet der Erfindung

Die Erfindung betrifft allgemein das Gebiet der radarbasierten Füllstandmessung. Insbesondere betrifft die Erfindung ein Radar-Füllstandmessgerät mit adaptiver Sendeleistung zur Bestimmung eines Füllstandes eines Mediums. Ferner betrifft die Erfindung ein Verfahren zum Betreiben eines solchen Radar-Füllstandmessgerätes. Des Weiteren betrifft die Erfindung ein Programmelement, welches ein Radar-Füllstandmessgerät anleitet, das Verfahren durchzuführen, und ein computerlesbares Speichermedium, auf welchem das Programmelement gespeichert ist.

### Technischer Hintergrund der Erfindung

Radarbasierte Füllstandmessgeräte und/oder Radar-Füllstandmessgeräte weisen in der Regel ein Radarmodul zur Erzeugung eines Sendesignals, insbesondere eines hochfrequenten Radarsendesignals, auf.

Allgemein wird bei Radar-Füllstandmessgeräten das Sendesignal bzw. das Radarsendesignal an eine Oberfläche eines Mediums abgestrahlt, wobei ein Teil des Sendesignals an der Oberfläche reflektiert wird und wiederum von dem Radar-Füllstandmessgerät als Empfangssignal empfangen wird. Basierend auf einem Laufzeitverfahren kann so die Entfernung des Radar-Füllstandmessgeräts zur Oberfläche des Mediums und/oder der Füllstand des Mediums ermittelt werden.

Das Empfangssignal wird zur eigentlichen Bestimmung des Füllstandes in der Regel in ein digitales Messsignal gewandelt, welches mit dem Empfangssignal korreliert. Das erhaltene Messsignal wird anschließend häufig unter Berücksichtigung wenigstens eines Auswerteparameters ausgewertet und/oder verarbeitet. Beispielsweise kann eine vordefinierte und feste Schwelle für eine Amplitude des Empfangssignals zur Auswertung herangezogen werden. Beispielsweise können Signalanteile des Messsignals und/oder Messwerte, welche die Schwelle nicht erreichen und/oder überschreiten bei der Ermittlung des Füllstandes unberücksichtigt bleiben.

US 2007/0101810 A1 beschreibt ein Radar-Füllstandmessgerät mit variabler Sendeleistung. Dabei kann ein Verstärkungsfaktor eines Verstärkers zur Verstärkung eines analogen Empfangssignals variiert werden.

DE 10 2006 034 554 A1 beschreibt ein Füllstandmessgerät mit unabhängiger Referenzpulserzeugung, wobei eine Sendeleistung variiert werden kann.

### Zusammenfassung der Erfindung

Es ist eine Aufgabe der Erfindung, ein verbessertes und flexibel einsetzbares Radar-Füllstandmessgerät bereitzustellen.

Diese Aufgabe wird durch den Gegenstand der unabhängigen Ansprüche gelöst. Ausführungsformen und Weiterbildungen der Erfindung sind den abhängigen Ansprüchen, der Beschreibung und den Figuren zu entnehmen.

Ein erster Aspekt der Erfindung betrifft ein Radar-Füllstandmessgerät, im Folgenden auch Füllstandmessgerät genannt, zum Ermitteln eines Füllstandes eines Mediums. Das Radar-Füllstandmessgerät weist eine Sendeeinheit zum Senden eines Sendesignals, eines Radarsendesignals und/oder eines Radarsignals in Richtung des Mediums auf. Weiter weist das Radar-Füllstandmessgerät eine Empfangseinheit zum Empfangen eines an dem Medium und/oder an einer Oberfläche des Mediums reflektierten Empfangssignals und/oder Radarempfangssignals sowie eine Steuereinheit auf. Die Steuereinheit ist dazu eingerichtet, basierend auf dem Empfangssignal und basierend auf wenigstens einem Auswerteparameter den Füllstand des Mediums zu ermitteln. Das Radar-Füllstandmessgerät ist ferner dazu eingerichtet, eine Sendeleistung und/oder einen Sendepegel des Sendesignals zu variieren, zu verändern und/oder anzupassen. Das Radar-Füllstandmessgerät kann somit ein Füllstandmessgerät mit adaptiver Sendeleistung sein. Die Steuereinheit ist ferner dazu eingerichtet, eine aktuelle Sendeleistung des Sendesignals zu ermitteln und/oder eine Variation der Sendeleistung relativ zu einer vorhergehenden und/oder vergangenen Füllstandmessung zu ermitteln. Erfindungsgemäß ist die Steuereinheit dazu eingerichtet, zur Ermittlung des Füllstandes einen Wert des wenigstens einen Auswerteparameters, das Empfangssignal basierend auf der ermittelten, aktuellen Sendeleistung zu ermitteln, zu berechnen, zu variieren, zu verändern und/oder anzupassen, sodass der Füllstand unter Berücksichtigung der aktuellen Sendeleistung ermittelt ist.

Das erfindungsgemäße Radar-Füllstandmessgerät kann insbesondere zur Ermittlung des Füllstandes nach dem Laufzeitprinzip ausgestaltet sein. Die Erfindung kann jedoch auch in anderen Füllstandmessgeräten in vorteilhafter Weise eingesetzt werden, beispielsweise in Ultraschall-Füllstandmessgeräten, in optischen Füllstandmessgeräten und/oder radiometrischen Füllstandmessgeräten.

Der Auswerteparameter kann hier und im Folgenden einen Parameter bezeichnen, welcher zur Auswertung des Empfangssignals und/oder zur Auswertung des mit dem Empfangssignal korrelierenden Messsignals von der Steuereinheit berücksichtigt und/oder herangezogen wird. Beispielsweise kann die Steuereinheit dazu eingerichtet sein, zumindest einen Teil des Empfangssignals und/oder des Messsignals mit einem Wert des Auswerteparameters zu vergleichen, um den Füllstand des Mediums zu ermitteln und/oder zu bestimmen.

Die Sendeeinheit kann etwa eine Sendeschaltung, einen Sendekanal und/oder einen Sendeschaltkreis des Radar-Füllstandmessgeräts bezeichnen. Analog kann die Empfangseinheit eine Empfangsschaltung, einen Empfangskanal und/oder einen Empfangsschaltkreis des Radar-Füllstandmessgeräts bezeichnen. Die Sendeeinheit und die Empfangseinheit können dabei auch als kombinierte Sende-Empfangseinheit ausgebildet sein. Die Sende-Empfangseinheit kann beispielsweise eine Sende-Empfangsweiche zur Differenzierung, insbesondere zur zeitlichen Differenzierung, des Sendesignals und des zum Sendesignal zeitlich verzögerten Empfangssignals aufweisen. Ferner kann die Steuereinheit eine Logikeinheit, eine Steuerschaltung, einen Steuerschaltkreis, eine Auswerteschaltung und/oder ein Steuerwerk bezeichnen.

Bei Radar-Füllstandmessgeräten wird das Sendesignal von der Sendeeinheit in Richtung des Mediums abgestrahlt und an der Oberfläche des Mediums zumindest teilweise reflektiert. Das an der Oberfläche des Mediums reflektierte Empfangssignal kann durch die Empfangseinheit des Füllstandmessgeräts empfangen werden. Die Signallaufzeit zwischen dem Sendesignal und dem Empfangssignal kann durch das Füllstandmessgerät und/oder die Steuereinheit des Radar-Füllstandmessgeräts bestimmt werden. Hieraus kann bei bekannter Ausbreitungsgeschwindigkeit des Sendesignals und/oder des Empfangssignal und beispielsweise unter Berücksichtigung einer Einbaulage des Füllstandmessgeräts der Füllstand des Mediums bestimmt werden.

Die Erfindung kann insbesonders als auf den nachfolgend beschriebenen Erkenntnissen beruhend angesehen werden. Bei Radar-Füllstandmessgeräten kann es vorteilhaft sein, die Sendeleistung und/oder einen Sendepegel des Sendesignals zu variieren, anzupassen und/oder zu verändern, um so beispielsweise einer aktuellen Messaufgabe gerecht zu werden. So kann etwa bei einem gut reflektierenden Medium und/oder Messgut, welches das ausgesendete Sendesignal größtenteils reflektiert, die Sendeleistung und/oder der Sendepegel reduziert werden. Hingegen kann es bei einem Medium, welches nur einen geringen Anteil des Sendesignals reflektiert, vorteilhaft sein, die Sendeleistung und/oder den Sendepegel zu erhöhen, um so ein auswertbares und aussagekräftiges Empfangssignal zu erhalten. Es sei angemerkt, dass ein schwach reflektiertes Sendesignal, d.h. ein Empfangssignal mir geringer Empfangsleistung und/oder geringem Empfangspegel, nicht zwingend auf die physikalischen Eigenschaften des zu messenden Mediums zurückgeführt werden kann. Bei einem Radar-Füllstandmessgerät kann beispielsweise eine Anhaftung an und/oder eine Verschmutzung der Antenne die Empfangseigenschaften beinträchtigen, so dass eine Erhöhung der Sendeleistung vorteilhaft sein kann, um weiterhin den Füllstand bzw. die Füllhöhe präzise erfassen zu können. Des Weiteren kann durch die Variation der Sendeleistung der Sendeeinheit eine manuelle Wartung des Radar-Füllstandmessgeräts hinausgezögert werden oder sogar überflüssig werden. Ferner kann durch die Anpassung der Sendeleistung der nötige Energieaufwand des Radar-Füllstandmessgeräts für eine Messung reduziert werden.

Der von dem Medium reflektierte und zumindest teilweise als Empfangssignal empfangene Teil des Sendesignals kann etwa mit schaltungstechnischem Aufwand, z.B. in Form wenigstens eines Filters und/oder Verstärkers, gefiltert und/oder verstärkt werden. Anschließend erfolgt im Regelfall eine Analog-Digital-Wandlung (A/D-Wandlung) des Empfangssignals. Dabei kann das Empfangssignal abgetastet werden und digitalisierte Abtastwerte des Empfangssignals, welche hier und im Folgenden als mit dem Empfangssignal korrelierendes Messsignal bezeichnet sein können, können in einem Datenspeicher, einer Speichereinrichtung und/oder einer Speichervorrichtung des Radar-Füllstandmessgeräts hinterlegt und mittels der Steuereinheit, etwa mittels eines Mikrocontrollers oder einer anderweitigen Steuereinheit, zur Ermittlung eines Abstandes zwischen Medium und Radar-Füllstandmessgerät und/oder zur Ermittlung eines Füllstandes des Mediums ausgewertet werden. Die Steuereinheit kann dazu eingerichtet sein, beispielsweise mittels eines geeigneten Auswerteverfahrens und/oder Auswertealgorithmus, aus dem abgetasteten Empfangssignal, d.h. dem mit dem Empfangssignal korrelierenden, digitalen Messsignal, die Reflexion an der Oberfläche des Mediums zu bestimmen und basierend darauf den Füllstand des Mediums zu bestimmen. Andere Reflexionen in dem Empfangssignal und/oder dem Messsignal, die z.B. durch Behältereinbauten, wie Rührwerke, Sichtfenster und/oder Anschlüsse, durch die Antenne des Radar-Füllstandmessgeräts selbst und/oder durch Verschmutzungen entstehen können, sollten von der Steuereinheit erkannt werden und als Reflexion an der Oberfläche des Mediums und/oder des Füllguts ausgeschlossen werden. Bei gängigen Radar-Füllstandmessgeräten kann hierfür ein oder mehrere Auswerteparameter herangezogen werden, wobei der wenigstens eine Auswerteparameter etwa eine vordefinierte und feste Schwelle, ein Schwellwert und/oder eine fester Grenzwert für die Amplitude des Empfangssignals und/oder des digitalen Messsignals sein kann. Ein Wert des wenigstens einen Auswerteparameters kann so etwa einen Schwellwert für die Amplitude des Empfangssignals und/oder des Messsignals bezeichnen. So können beispielsweise eine erste Schwelle, unterhalb derer Anteile des Messsignals verworfen werden, und eine zweite Schwelle, oberhalb derer Anteile des Messsignals verworfen werden, definiert sein. Auch können der Einbau des Radar-Füllstandmessgeräts und/oder die physikalischen Eigenschaften des zu messenden Mediums im Radar-Füllstandmessgerät mittels weiterer vordefinierter und fester Auswerteparameter parametriert werden und/oder in einer Speichervorrichtung in dem Radar-Füllstandmessgerät hinterlegt und/oder gespeichert sein. Die Steuereinheit kann basierend auf der Gesamtheit von voranstehend erläuterten Auswerteparametern und/oder den zugehörigen Werten dieser Auswerteparameter ermitteln, ob es sich bei einem Anteil des Messsignals, etwa einem Peak in dem Messsignal, um eine unerwünschte Störung, wie eine Reflexion an der Antenne des Radar-Füllstandmessgeräts und/oder an Behältereinbauten, oder um die zu messende Oberfläche des Mediums handelt. Eine Hinterlegung von festen Werten der Auswerteparameter in einer Speichervorrichtung des Füllstandmessgeräts kann jedoch bei Variation der Sendeleistung zu einer Verfälschung der Messergebnisse führen, da etwa bei zu geringer Sendeleistung und damit einhergehend zu geringer Empfangsleistung des Empfangssignals eine Amplitude des Empfangssignals und/oder des damit korrelierenden Messsignals zumindest in einem Teilbereich zu gering sein kann. Eine von der Oberfläche des Mediums stammende Reflexion kann so etwa von der Steuereinheit fälschlicherweise als eine Störreflexion erkannt und/oder verworfen werden.

Um auch bei einem adaptiven Sendepegel und/oder einer adaptiven Sendeleistung sicherzustellen, dass das empfangene Empfangssignal und das damit korrelierende digitale Messsignal zuverlässig und präzise ausgewertet werden kann, ist die Steuereinheit erfindungsgemäß dazu eingerichtet, die Sendeleistung zu ermitteln und einen Wert des wenigstens einen Auswerteparameters entsprechend der Sendeleistung und/oder basierend auf der Sendeleistung zu ermitteln, zu verändern, zu skalieren, zu variieren und/oder anzupassen. So kann bei Erhöhung der Sendeleistung, etwa relativ zu einer vorhergehenden Messung, der Wert des Auswerteparameters entsprechend erhöht werden, und bei einer Verringerung der Sendeleistung kann der Wert entsprechend reduziert werden. Auch kann die Steuereinheit dazu eingerichtet sein, eine Variation der Sendeleistung relativ zu einer vorhergehenden Messung zu ermitteln, und den Wert des wenigstens einen Auswerteparameters entsprechend der ermittelten Variation zu variieren, anzupassen und/oder zu verändern. Die ermittelte Variation kann dabei einen Betrag, um welchen die Sendeleistung variiert wurde, und eine Richtung bzw. ein Vorzeichen der Variation umfassen. Mit anderen Worten kann die Steuereinheit dazu eingerichtet sein, den Betrag der Variation zu ermitteln, und zu ermitteln, ob die Sendeleistung relativ zur vorhergehenden Messung erhöht oder reduziert wurde. Hierdurch kann die Qualität der Auswertung des Empfangssignals und/oder des damit korrelierenden digitalen Messsignals erhöht werden. Insgesamt kann so eine Präzision und/oder Genauigkeit der Füllstandmessung verbessert werden und es kann ein verbessertes Füllstandmessgerät bereitgestellt werden.

Alternativ oder zusätzlich kann die Steuereinheit dazu eingerichtet sein, das Empfangssignal und/oder das damit korrelierende Messsignal basierend auf und/oder entsprechend der Sendeleistung zu variieren, zu skalieren, zu verändern und/oder anzupassen. Beispielsweise kann das Empfangssignal und/oder das Messsignal entsprechend der Sendeleistung verstärkt oder reduziert werden.

Die Variation, Einstellung und/oder Adaption der Sendeleistung selbst kann beispielsweise anhand des empfangenen Empfangssignal einer zeitlich vorhergehenden Messung oder zeitlich vorhergehender Messungen erfolgen. Im Speziellen kann z.B. die Amplitude der Reflexion an der Oberfläche des Mediums herangezogen werden, um festzustellen, ob die Sendeleistung reduziert oder erhöht werden sollte. Die Variation der Sendeleistung kann dabei sowohl kontinuierlich als auch schrittweise, also in vordefinierten Inkrementen, erfolgen. Auch kann eine maximale bzw. minimale Änderung vorgesehen sein. Allgemein kann die Sendeleistung in absolute Werten, in relativen Werten relativ zu einer Referenzmessung und/oder prozentual angegeben sein. Analog kann der Wert des wenigstens einen Auswerteparameters, das Empfangssignal und/oder das mit dem Empfangssignal korrelierende Messsignal in absoluten Werten, in relativen Werten und/oder prozentual variiert, angepasst und/oder verändert werden.

Das Medium kann allgemein ein Füllgut, eine Flüssigkeit und/oder ein Fluid in einem Behälter sein. Alternativ oder zusätzlich kann das Medium ein Schüttgut in einem Behälter und/oder in einer Lagerstätte, wie etwa einer Schüttguthalde, sein. Weiter kann das Medium auch ein fluides Medium, wie etwa ein Gerinne, bezeichnen und das erfindungsgemäße Radar-Füllstandmessgerät kann gleichsam für eine Gerinnemessung eingesetzt werden. Des Weiteren können hier und im Folgenden die Begriffe Oberfläche des Mediums, Mediumoberfläche und Füllgutoberfläche synonym verwendet werden.

Gemäß einer Ausführungsform der Erfindung umfasst das Radar-Füllstandmessgerät eine Speichervorrichtung zum Speichern und/oder Hinterlegen des wenigstens einen Auswerteparameters. Insbesondere kann im Speicher der wenigstens eine Auswerteparameter hinterlegt sein. Ferner kann der hinterlegte Auswerteparameter durch die Steuereinheit, etwa im Rahmen einer Initialisierung und/oder während eines Betriebes des Radar-Füllstandmessgeräts, überschrieben und/oder geändert werden. Es können in der Speichervorrichtung auch mehrere Auswerteparameter und/oder ein Parametersatz von Auswerteparametern hinterlegt sein. Beispielsweise kann ein Parametersatz eine Störechokurve, eine Störechoausblendung, ein Störstellenprofil und/oder ein Behälterleerprofil umfassen.

Gemäß einer Ausführungsform der Erfindung umfasst der wenigstens eine Auswerteparameter einen Schwellwert und/oder einen Grenzwert für eine Amplitude des Empfangssignals und/oder eines mit dem Empfangssignal korrelierenden Messsignals. Mit anderen Worten kann ein Wert des Auswerteparameters ein Schwellwert für die Amplitude des Empfangssignals und/oder des Messsignals sein. Ferner ist die Steuereinheit dazu eingerichtet, den Schwellwert basierend auf der ermittelten, aktuellen Sendeleistung zu ermitteln, zu variieren, zu skalieren, zu verändern und/oder anzupassen.

Typischerweise wird das Messsignal in Form einer Echokurve erfasst, welche unterschiedlich hohe Amplituden bei unterschiedlichen Laufzeiten des Sende- und/oder Empfangssignals aufweisen kann. Die unterschiedlichen Laufzeiten können dabei unterschiedlichen Abständen zum Radar-Füllstandmessgerät entsprechen, an welchen das Sendesignal reflektiert wurde. Eine Amplitude, ein Peak oder ein Ausschlag in der Echokurve kann etwa durch ein Störobjekt oder die Oberfläche des zu messenden Mediums hervorgerufen sein. Für die Bestimmung des Abstandes zu dem Medium und/oder des Füllstandes des Mediums in einem Behälter kann es vorteilhaft sein, eine Untergrenze und/oder eine Obergrenze für eine Amplitude, etwa in Form einer Schwelle und/oder eines Schwellwertes, festzulegen. Die Amplituden und/oder Anteile des Messsignals unterhalb und/oder oberhalb der Schwelle können beispielsweise durch Störstellen, Störobjekte und/oder Mehrfachreflexionen im Behälter hervorgerufen sein. Durch die Verwendung von Schwellen und/oder Grenzwerten können diese Störeinflüsse aus dem Messsignal in vorteilhafter Weise herausgefiltert werden. Gemäß einer weiteren Ausführungsform der Erfindung ist die Steuereinheit dazu eingerichtet, den Füllstand des Mediums basierend auf mehreren Auswerteparametern zu ermitteln. Die Steuereinheit ist dazu eingerichtet, zur Ermittlung des Füllstandes einen Wert jedes Auswerteparameters basierend auf der ermittelten, aktuellen Sendeleistung zu ermitteln zu variieren, zu skalieren, zu verändern und/oder anzupassen. Ferner können Skalierungsfaktoren und/oder Verschiebungen, wie z.B. ein Offset, für jeden der Auswerteparameter ermittelt werden, um die Werte zumindest eines Teils der Auswerteparameter anzupassen. Die einzelnen Werte der Auswerteparameter können dabei identisch oder unterschiedlich zueinander variiert werden. Beispielsweise kann die Steuereinheit dazu eingerichtet sein, einen Skalierungsfaktor für die Werte der einzelnen Auswerteparameter zu ermitteln und der Werte jedes Auswerteparameters kann basierend auf dem ermittelten Skalierungsfaktor verändert werden, etwa durch Multiplikation des Skalierungswertes mit dem Wert des zugehörigen Auswerteparameters. Alternativ oder zusätzlich kann die Steuereinheit dazu eingerichtet sein, unterschiedliche Skalierungsfaktoren für die Werte unterschiedlicher Auswerteparameter zu ermitteln, so dass die Werte einzelner Auswerteparameter relativ zueinander unterschiedlich basierend auf den Skalierungsfaktoren verändert werden. Alternativ oder zusätzlich kann die Steuereinheit eine oder mehrere Verschiebungen für einen oder mehrere Werte der Auswerteparameter ermitteln. Mittels Addition und/oder Subtraktion der Verschiebung und eines Wertes eines Auswerteparameters kann so der Wert verändert werden. Des Weiteren kann für jeden Auswerteparameter eine mathematische Formel und/oder ein funktioneller Zusammenhang zur Beschreibung eines Zusammenhangs und/oder einer Abhängigkeit zwischen dem jeweiligen Wert eines Auswerteparameters und der Sendeleistung, etwa in der Speichervorrichtung, hinterlegt sein. Die Steuereinheit kann hierzu dazu eingerichtet sein, basierend auf der Sendeleistung als Eingangsgröße für die mathematische Formel und/oder den funktionellen Zusammenhang den Wert des zugehörigen Auswerteparameters zu berechnen. Auch kann ein Modell zur Berechnung eines Wertes eines oder mehrerer Auswerteparameter in der Speichervorrichtung hinterlegt sein, und die Steuereinheit kann dazu eingerichtet sein, basierend auf dem Modell und der Sendeleistung einen Wert für einen oder mehrere Auswerteparameter zu ermitteln. Des Weiteren kann die Steuereinheit dazu eingerichtet sein, wenigstens einen Wert wenigstens eines Auswerteparameters basierend auf der Sendeleistung und basierend auf wenigstens einer weiteren Einflussgröße, wie etwa einer Temperatur, einem Luftdruck und/oder einer Luftfeuchtigkeit zu ermitteln, zu variieren und/oder anzupassen.

Gemäß einer Ausführungsform der Erfindung ist die Steuereinheit dazu eingerichtet, den Wert des wenigstens einen Auswerteparameters linear, logarithmisch, quadratisch oder exponentiell mit der Sendeleistung, etwa proportional oder indirekt proportional, zu variieren zu verändern und/oder anzupassen. Auch beliebige andere Abhängigkeiten zwischen dem Wert des Auswerteparameters und der Sendeleistung können verwendet werden. Ferner ist die Steuereinheit dazu eingerichtet, das wenigstens eine mit dem Empfangssignal und/oder mit Empfangsleistung korrelierende Messsignal linear, logarithmisch, quadratisch oder exponentiell mit der Sendeleistung, etwa proportional oder indirekt proportional, zu variieren, zu verändern und/oder anzupassen. Des Weiteren kann die Steuereinheit dazu eingerichtet sein, das Messsignal und/oder wenigstens einen Wert wenigstens eines Auswerteparameters basierend auf einer Formel, einem Modell, einem Kennfeld und/oder einer Lookup-Tabelle zu variieren.

Gemäß einer Ausführungsform der Erfindung umfasst der wenigstens eine Auswerteparameter eine Störsignalausblendendung, welche Informationen bezüglich einer Lage von Störobjekten, insbesondere einer Lage von Störobjekten in einem Behälter, aufweist. Diese Störobjekte können reflektierende Objekte in einem Behälter, etwa Behältereinbauten, Rührwerke, Sichtfenster, Einlässe und/oder Auslässe, sein.

Eine Störsignalausblendung, welche etwa ein Störechoprofil und/oder ein Behälterleerprofil aufweisen kann, kann bei wenig Füllstand und/oder einem leeren Behälter als Referenzmessung durchgeführt werden. Hierbei kann das Sendesignal in den Behälter ausgestrahlt und die entstehenden Reflektionen können durch das Radar-Füllstandmessgerät erfasst und durch die Steuereinheit unter Ermittlung des Störechoprofils und/oder des Behälterleerprofils ausgewertet werden. Da typischerweise die Messung ohne Medium und/oder bei geringem Füllstand durchgeführt wird, können die Reflektionen mit der Behältergeometrie und/oder mit Einbauten in dem Behälter korrelieren und/oder durch diese hervorgerufen sein. Das Störechoprofil, das Behälterleerprofil und/oder die Störsignalausblendung kann dann in der Speichervorrichtung hinterlegt werden, und die Steuereinheit kann dazu eingerichtet sein, das Empfangssignal und/oder das Messsignal basierend auf der ermittelten Störsignalausblendung auszuwerten und/oder mit der Störsignalausblendung zu vergleichen. Beispielsweise kann die Steuereinheit dazu eingerichtet sein, Anteile des Empfangssignals und/oder des Messsignals, welche eine Amplitude oberhalb und/oder unterhalb einer solchen Störsignalausblendung als Reflexion des Mediums zu identifizieren. Auch kann die Steuereinheit dazu eingerichtet sein, Signalanteile des Empfangssignals und/oder des Messsignals basierend auf der Störsignalausblendung für die Ermittlung des Füllstandes außer Acht zu lassen. Beispielsweise kann mittels der Störsignalausblendung ermittelt sein, dass in einem Behälter in einem bestimmten Abstand zum Füllstandmessgerät ein Rührwerk angeordnet ist. Basierend auf dieser Information kann die Steuereinheit Reflexionen in diesem Abstand unberücksichtigt lassen und/oder ausblenden.

Gemäß einer weiteren Ausführungsform der Erfindung weist die Störsignalausblendung ein Störechoprofil auf, welches mit der Lage von Störobjekten, z.B. in einem Behälter, korreliert. Alternativ oder zusätzlich weist die Störsignalausblendung ein Behälterleerprofil auf, welches mit einer Geometrie eines Behälters für das Medium korreliert. Dadurch können etwaige Störeinflüsse umfassend bei der Auswertung des Empfangssignals und/oder des Messsignals berücksichtigt und/oder korrigiert werden.

Gemäß einer Ausführungsform der Erfindung ist die Steuereinheit dazu eingerichtet, einen Referenzwert des wenigstens einen Auswerteparameters durch wenigstens eine Referenzmessung bei einer vorbestimmten Sendeleistung zu ermitteln. Die Steuereinheit ist ferner dazu eingerichtet, einen funktionalen Zusammenhang zwischen Werten des wenigstens einen Auswerteparameters und der Sendeleistung basierend auf der wenigstens einen Referenzmessung zu ermitteln. Dies kann beispielsweise basierend eine Messung und/oder Modellierung einer elektronischen Schaltung des Radar-Füllstandmessgeräts erfolgen. Beispielsweise kann durch Modellierung der elektronischen Schaltung des Radar-Füllstandmessgeräts ein relativer Zusammenhang zwischen Sendeleistung und dem Wert des wenigstens einen Auswerteparameters ermittelt werden. Basierend auf der Referenzmessung können so absolute Werte des wenigstens einen Auswerteparameters ermittelt werden. Alternativ oder zusätzlich kann die Steuereinheit dazu eingerichtet sein, wenigstens eine Referenzstörsignalausblendung durch wenigstens eine Referenzmessung bei einer vorbestimmten Sendeleistung zu ermitteln. Hierbei kann die Steuereinheit ferner dazu eingerichtet sein, einen funktionalen Zusammenhang zwischen Werten der wenigstens einen Referenzstörsignalausblendung und der Sendeleistung basierend auf der wenigstens einen Referenzmessung zu ermitteln. Dies kann beispielsweise durch eine Messung und/oder Modellierung der elektronischen Schaltung erfolgen.

Gemäß einer weiteren Ausführungsform der Erfindung ist die Steuereinheit dazu eingerichtet, einen ersten Referenzwert des wenigstens einen Auswerteparameters und/oder eine erste Referenzstörsignalausblendung durch eine erste Referenzmessung mit einer ersten Sendeleistung zu ermitteln. Des Weiteren ist die Steuereinheit dazu eingerichtet, einen zweiten Referenzwert des wenigstens einen Auswerteparameters und/oder eine zweite Referenzstörsignalausblendung durch eine zweite Referenzmessung mit einer zweiten Sendeleistung zu ermitteln, welche sich von der ersten Sendeleistung unterscheidet. Die Steuereinheit ist dazu eingerichtet, einen funktionalen Zusammenhang zwischen Werten des wenigstens einen Auswerteparameters und der Sendeleistung basierend auf der ersten Referenzmessung und der zweiten Referenzmessung zu ermitteln. Alternativ oder zusätzlich kann die Steuereinheit dazu eingerichtet sein, einen funktionalen Zusammenhang zwischen Werten der Störsignalausblendung und der Sendeleistung basierend auf der ersten Referenzmessung und/oder der zweiten Referenzmessung zu ermitteln. Basierend auf dem ermittelten ersten Referenzwert und dem zweiten Referenzwert kann, etwa durch Interpolation und/oder Extrapolation, der Wert des wenigstens einen Auswerteparameters für eine Sendeleistung ermittelt werden, welche sich von der ersten und der zweiten Sendeleistung unterscheidet. Analog können Werte der Störsignalausblendung basierend auf der ersten Referenzstörsignalausblendung und der zweiten Referenzstörsignalausblendung für eine Sendeleistung ermittelt werden, welche sich von der ersten und der zweiten Sendeleistung unterscheidet.

Gemäß einer Ausführungsform der Erfindung ist die erste Sendeleistung eine maximale Sendeleistung und die zweite Sendeleistung ist eine minimale Sendeleistung. Derart kann sichergestellt sein, dass für eine beliebige Sendeleistung zwischen der ersten und der zweiten Sendeleistung zuverlässig ein Wert des wenigstens eines Auswertparameters und/oder eine Störsignalausblendung, etwa mittels Interpolation, ermittelt werden kann.

Gemäß einer Ausführungsform der Erfindung ist das Radar-Füllstandmessgerät und/oder die Steuereinheit dazu eingerichtet, die Sendeleistung des Sendesignals basierend auf einem zeitlich vorhergehenden Empfangssignal zu variieren, zu verändern und/oder anzupassen, z.B. basierend auf einer Amplitude der Reflexion an der Oberfläche des Mediums und/oder an der Füllgutoberfläche. Durch die Anpassung der Sendeleistung anhand des vorhergehenden Empfangssignals kann die Sendeleistung in vorteilhafter Weise etwa an physikalische Eigenschaften des Mediums, insbesondere eine Reflexivität des Mediums für das Sendesignal, angepasst werden. Reflektiert ein Medium etwa einen hohen Anteil des Sendesignals, so ist entsprechend die Empfangsleistung des Empfangssignals groß, und die Sendeleistung kann in darauffolgenden Messungen ohne Qualitätseinbußen bezüglich einer Auswertung des Empfangssignals reduziert werden.

Gemäß einer Ausführungsform der Erfindung ist das Radar-Füllstandmessgerät und/oder die Steuereinheit dazu eingerichtet, die Sendeleistung des Sendesignals kontinuierlich und/oder schrittweise zwischen einer minimalen Sendeleistung und einer maximalen Sendeleistung zu variieren, zu verändern und/oder anzupassen. Die einzelnen Schritte der schrittweisen Anpassung des Sendesignals können beliebig über den Bereich der Sendeleistung verteilt sein.

Gemäß einer weiteren Ausführungsform der Erfindung ist die Steuereinheit dazu eingerichtet, die Sendeleistung durch Übermittlung eines Steuersignals an die Sendeeinheit zu variieren, zu verändern und/oder anzupassen. Alternativ oder zusätzlich ist die Steuereinheit dazu eingerichtet, die Sendeleistung durch eine Abfrage von der Sendeeinheit zu ermitteln. Diese Sendeleistung kann etwa in absoluten Werten, in relativen Werten relativ zu einem Referenzwert und/oder prozentual angegeben werden. Entsprechend kann eine Anpassung und/oder Variation des Wertes des wenigstens einen Auswerteparameters und/oder einer Störsignalausblendung absolut, relativ und/oder prozentual erfolgen. Des Weiteren kann die Anpassung und/oder die Variation des zu dem Empfangssignal korrelierenden Messsignals absolut, relativ und/oder prozentual erfolgen.

Der variierte Wert des Auswerteparameter und/oder variierte Werte der Störsignalausblendung kann in der Speichereinheit und/oder einer Speichervorrichtung des Radar-Füllstandmessgerät abgespeichert werden. Ferner kann auch die Variation und/oder die Anpassung des Wertes des wenigstens einen Auswerteparameters und/oder Werte der Störsignalausblendung in regelmäßigen Zeitintervallen durch die Steuereinheit überprüft und/oder wiederholt werden. Dadurch kann etwa eine Verschmutzung der Antenne überprüft und/oder zuverlässig kompensiert werden. Auch kann die Steuereinheit dazu eingerichtet sein, die wenigstens eine Referenzmessung in gewissen Zeitintervallen zu wiederholen, um eine Korrelation zwischen der Sendeleistung und Werten des wenigstens einen Auswerteparameters und/oder Werten der Störsignalausblendung zu überprüfen und/oder erneut zu ermitteln. Insbesondere kann die Steuereinheit dazu eingerichtet sein, die Referenzmessung, bei Unterschreiten eines vorbestimmten Füllstandes des Mediums im Behälter durchzuführen und/oder zu wiederholen. Mit anderen Worten kann ein Durchführen der Referenzmessung durch Erreichen und/oder Unterschreiten des vorbestimmten Füllstandes getriggert und/oder ausgelöst werden. Der vorbestimmte Füllstand kann beispielsweise rund 20% eines maximalen Füllstandes betragen. So können Werte der Störsignalausblendung, insbesondere ein Störechoprofil und/oder ein Behälterleerprofil bei geringem Füllstand und/oder leerem Behälter ermittelt werden. Derart ermittelte Werte der Störsignalausblendung und/oder ein derart ermittelter Referenzwert des Auswerteparameters kann in der Speichervorrichtung hinterlegt werden und so zur Auswertung des Empfangssignals in darauffolgenden Messungen verwendet werden. Alternativ oder zusätzlich kann das Radar-Füllstandmessgerät dazu eingerichtet sein, wenigstens eine Referenzmessung basierend und/oder in Antwort auf einer Benutzereingabe durchzuführen, zu initiieren und/oder zu wiederholen.

Gemäß einer Ausführungsform ist das Radar-Füllstandmessgeräts als V-Band-Radarfüllstandmessgerät, als E-Band-Radarfüllstandmessgerät, als W-Band-Radarfüllstandmessgerät, als F-Band-Radarfüllstandmessgerät, als D-Band-Radarfüllstandmessgerät, als G-Band-Radarfüllstandmessgerät, als Y-Band-Radarfüllstandmessgerät und/oder als J-Band-Radarfüllstandmessgerät ausgeführt. Mit anderen Worten kann die Sendefrequenz des Sendesignals zwischen 60 GHz und 75 GHz (V-Band), zwischen 60 GHz und 90 GHz (E-Band), zwischen 75 GHz und 110 GHz (W-Band), zwischen 90 GHz und 140 GHz (F-Band), zwischen 110 GHz und 170 GHz (D-Band), zwischen 140 GHz und 220 GHz (G-Band), zwischen 170 GHz und 260 GHz (Y-Band), und/oder zwischen 220 GHz und 320 GHz (J-Band) betragen.

Ein zweiter Aspekt der Erfindung betrifft ein Verfahren zum Betreiben eines Radar-Füllstandmessgeräts. Das Verfahren weist die Folgenden die Schritte auf:
- Ermitteln, Einstellen, Anpassen und/oder Variieren einer Sendeleistung einer Sendeeinheit des Radar-Füllstandmessgeräts;
- Senden, mit der Sendeeinheit, eines Sendesignals, insbesondere eines Radarsendesignals, mit der ermittelten Sendeleistung in Richtung eines Mediums;
- Empfangen, mit einer Empfangseinheit des Radar-Füllstandmessgeräts, eines an dem Medium reflektierten Empfangssignals, insbesondere eines Radarempfangssignals;
- Variieren, basierend auf der ermittelten Sendeleistung, eines Wertes wenigstens eines Auswerteparameters; und
- Ermitteln eines Füllstandes des Mediums basierend auf dem Empfangssignal und basierend auf dem variierten Wert des wenigstens einen Auswerteparameters.

Ein weiterer Aspekt der Erfindung betrifft ein Programmelement, das, wenn es auf einer Steuereinheit eines Radar-Füllstandmessgeräts ausgeführt wird, das Radar-Füllstandmessgeräts anleitet, das oben und im Folgenden beschriebene Verfahren auszuführen.

Ein weiterer Aspekt dieser Erfindung betrifft ein computerlesbares Medium, auf dem ein Programmelement gespeichert ist, welches die Steuereinheit eines Radar-Füllstandmessgeräts anleitet, das oben und im Folgenden beschriebene Verfahren auszuführen Merkmale und/oder Elemente des Radar-Füllstandmessgeräts, so wie voranstehend und nachfolgend beschrieben, können Merkmale, Elemente und/oder Schritte des Verfahrens, so wie voranstehend und nachfolgend beschrieben, sein. Ebenso können Merkmale, Elemente und/oder Schritte des Verfahrens, so wie voranstehend und nachfolgend beschrieben, Merkmale und/oder Elemente des Radar-Füllstandmessgeräts, so wie voranstehend und nachfolgend beschrieben, sein.

Weitere Merkmale, Vorteile und Anwendungsmöglichkeiten der Erfindung ergeben sich aus der nachfolgenden Beschreibung der Ausführungsbeispiele und der Figuren.

Die Figuren sind schematisch und nicht maßstabsgetreu. Sind in der nachfolgenden Beschreibung der Figuren gleiche Bezugszeichen angegeben, so bezeichnen diese gleiche oder ähnliche Elemente.
Fig. 1 zeigt ein Blockschaltbild eines Radar-Füllstandmessgeräts gemäß einer Ausführungsform der Erfindung.
Fig. 2 illustriert ein mit einem erfindungsgemäßen Radar-Füllstandmessgerät ermitteltes Messsignal.
Fig. 3 illustriert ein mit einem erfindungsgemäßen Radar-Füllstandmessgerät ermitteltes Messsignal mit einer Störsignalausblendung.
Fig. 4 illustriert eine Variation der Störsignalausblendung aus Figur 3.
Fig. 5 illustriert eine Variation von Werten von Auswertparametern durch ein Radar-Füllstandmessgerät gemäß einem Ausführungsbeispiel der Erfindung.
Fig. 6 zeigt ein Flussdiagramm zur Illustration von Schritten eines Verfahrens zum Betreiben eines Radar-Füllstandmessgerätes gemäß einer Ausführungsform der Erfindung.

### Detaillierte Beschreibung von Ausführungsbeispielen

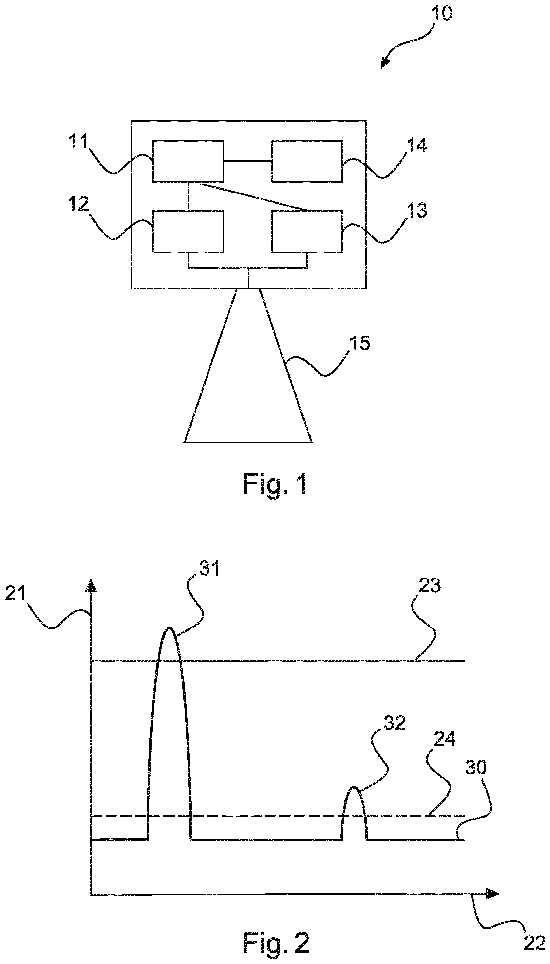

Figur 1 zeigt ein Blockschaltbild eines Radar-Füllstandmessgeräts 10 gemäß einem Ausführungsbeispiel der Erfindung. Das Radar-Füllstandmessgerät kann insbesondere zur Ermittlung eines Füllstandes eines Mediums, etwa in einem Behälter, basierend auf einem Laufzeitprinzip ausgestaltet sein.

Das Radar-Füllstandmessgerät 10 weist eine Steuereinheit 11, ein Speichereinheit 14 und/oder eine Speichervorrichtung 14, eine Sendeeinheit 12, eine Empfangseinheit 13 sowie eine Antenne 15 auf. Die Sendeeinheit 12 und die Empfangseinheit 13 können auch zu einer Sende-Empfangseinheit 12, 13 kombiniert sein. Über die Antenne 15 kann ein Sendesignal in Richtung des Mediums abgestrahlt werden, wobei ein Teil des Sendesignals an der Oberfläche des Mediums reflektiert wird und als Empfangssignal über die Antenne 15 empfangen werden kann. Das Empfangssignal kann optional etwa mittels wenigstens eines Filters gefiltert und/oder mittels wenigstens eines Verstärkers verstärkt werden. Das gegebenenfalls gefilterte und/oder verstärkte Empfangssignal kann dann mittels eines A/D-Wandlers abgetastet und als digitales Messsignal, welches mit dem Empfangssignal korreliert, ausgewertet werden.

Allgemein ist die Steuereinheit 11 dazu eingerichtet, mit der Sendeeinheit 12 und/oder der Empfangseinheit 13 zu kommunizieren. Insbesondere kann die Steuereinheit 11 eine Sendeleistung und/oder einen Sendepegel des Sendesignals variieren, verändern und/oder anpassen. Alternativ oder zusätzlich kann die Steuereinheit 11 dazu eingerichtet sein, eine aktuelle Sendeleistung von der Sendeeinheit 12 abzufragen. Die Sendeleistung und/oder der Sendepegel kann über einen absoluten, relativen oder prozentualen Wert beschrieben und/oder angegeben werden. Die Steuereinheit 11 kann somit die Information erhalten, dass z.B. das Sendesignal aktuell mit 80% der maximal möglichen Sendeleistung gesendet wird.

Mit anderen Worten ist die Steuereinheit 11 dazu eingerichtet, die Sendeleistung zu ermitteln. Ferner ist die Steuereinheit 11 dazu eingerichtet, basierend auf der ermittelten Sendeleistung einen Wert wenigstens eines Auswerteparameters zu ermitteln, anzupassen, zu berechnen, zu variieren und/oder zu verändern. Beispielsweise kann der Wert des wenigstens einen Auswerteparameters ein Schwellwert sein, bei dessen Überschreiten und/oder Unterschreiten ein Teil des Messsignals, etwa ein Peak, als Reflexion von der Oberfläche des Mediums durch die Steuereinheit 11 erkannt und/oder gewertet wird. Basierend auf dem variierten Wert des wenigstens einen Auswerteparameters kann so der Füllstand des Mediums unter Berücksichtigung der Sendeleistung zuverlässig ermittelt werden. Der Wert des wenigstens einen Auswertparameters kann etwa in der Speichervorrichtung 14 hinterlegt sein.

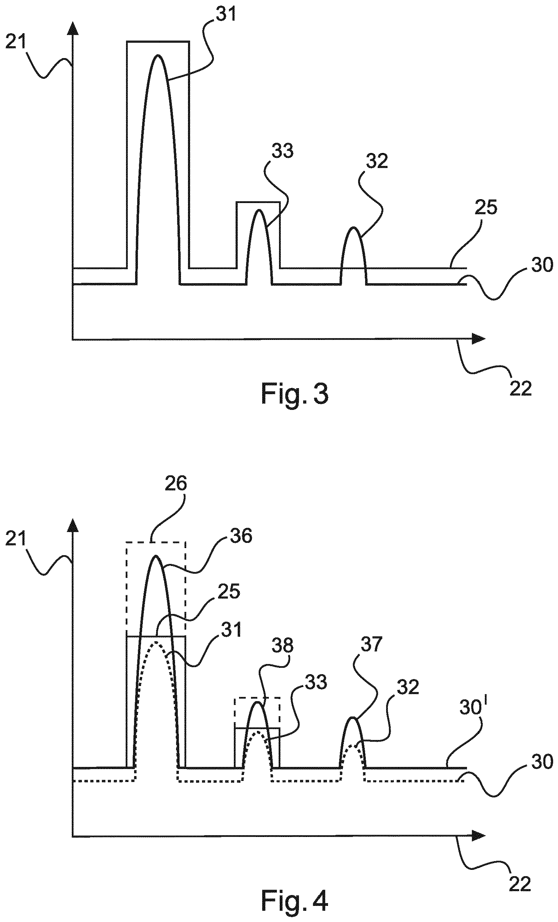

Auch kann die Steuereinheit 11 dazu eingerichtet sein, basierend auf dem Empfangssignal und/oder dem Messsignal sowie basierend auf mehreren Auswerteparametern den Füllstand zu ermitteln. Beispielsweise kann ein Parametersatz von Auswerteparametern in der Speichereinheit 14 hinterlegt sein, welche und/oder deren Werte eine Störsignalausblendung repräsentieren können, wie in Figuren 3 und 4 im Detail beschrieben. Die Störsignalausblendung kann etwa ein Störstellenprofil und/oder ein Behälterleerprofil umfassen. Um den Füllstand des Mediums unter Berücksichtigung der aktuellen Sendeleistung zu ermitteln, ist die Steuereinheit 11 dazu eingerichtet, Werte der Störsignalausblendung und/oder Werte des Parametersatzes der Störsignalausblendung basierend auf der ermittelten Sendeleistung zu variieren, zu verändern, zu berechnen und/oder anzupassen. Damit kann eine Präzision der Füllstandermittlung bei adaptivem Sendepegel in vorteilhafter Weise erhöht sein.

Die Störsignalausblendung und/oder Werte der Störsignalausblendung können etwa im Rahmen wenigstens einer Referenzmessung mit dem Radar-Füllstandmessgerät 10 bei bekanntem Füllstand, vorzugsweise bei leerem Behälter, mit bekannter Sendeleistung ermittelt werden. Eine weitere Störsignalausblendung und/oder Werte einer weiteren Störsignalausblendung können im Rahmen einer weiteren Referenzmessung bei einer weiteren Sendeleistung, welche sich von der Sendeleistung der vorhergehenden Referenzmessung unterscheiden kann, ermittelt werden. Basierend auf einer Interpolation und/oder Extrapolation können sodann Werte der Störsignalausblendung an die aktuelle Sendeleistung angepasst werden. Dasselbe Verfahren kann auch für einen etwa als Schwellwert vorliegenden Auswerteparameter und/oder jedweden anderen Auswerteparameter angewendet werden.

Figur 2 illustriert ein mit einem erfindungsgemäßen Radar-Füllstandmessgerät 10 ermitteltes Messsignal 30. Insbesondere kann das Messsignal 30 eine digitale Repräsentation des Empfangssignals, eine sogenannte Echokurve 30, sein, wie sie in der Steuereinheit 11 und/oder in der Speichervorrichtung 14 des Radar-Füllstandmessgeräts 10 nach der A/D-Wandlung vorliegen kann. Die x-Achse 22 repräsentiert dabei eine Zeitachse 22, d.h. eine Signallaufzeit des Sende- und/oder Empfangssignals, und die y-Achse 21 repräsentiert eine Signalstärke 21 und/oder Amplitude 21 des Messsignals 30. Die Zeitachse 21 korreliert dabei mit einem Abstand zu dem Füllstandmessgerät 10. Das Messsignal 30 weist eine erste Reflexion 31, welche beispielsweise durch Reflexion eines Teils des Sendesignals an der Antenne 15 des Radar-Füllstandmessgeräts 10 hervorgerufen sein kann, und eine zweite Reflexion 32 auf, welche durch eine Reflexion 32 des Sendesignals an der Oberfläche des Mediums hervorgerufen sein kann. Zur Auswertung des Messsignals ist in Figur 2 ferner ein Schwellwert 23 gezeigt, welcher ein Wert eines Auswerteparameters ist.

Die Steuereinheit 11 ist dazu eingerichtet, die zweite Reflexion 32, welche zeitlich nach der ersten Reflexion 31 der Antenne 15 auftritt, als Reflexion 32 an der Füllgutoberfläche zu erkennen und/oder zu werten, wenn die Amplitude 21 der zweiten Reflexion 32 den Schwellwert 23 überschreitet. Die definierte Schwelle 23 kann etwa einer Schwelle bei maximaler Sendeleistung des Radar-Füllstandmessgeräts 10 entsprechen. Das Sendesignal in dem in Figur 2 gezeigten Beispiel ist mit reduzierter Sendeleistung gesendet worden, so dass die resultierende Reflexion 32 des Messsignals 30 an der Füllgutoberfläche den Schwellwert 23 nicht erreicht und/oder übersteigt. Somit würde die Reflexion 32 des Füllstandes nicht als Füllstand erkannt werden.

Erfindungsgemäß ist die Steuereinheit 11 daher dazu eingerichtet, eine aktuelle Sendeleistung zu ermitteln und den Schwellwert 23 basierend auf der ermittelten Sendeleistung anzupassen, zu verändern und/oder zu variieren. Basierend auf der ermittelten Sendeleistung kann die Steuereinheit 11 den Schwellwert 23 auf einen niedrigeren Schwellwert 24 reduzieren, so dass die Reflexion 32 den angepassten Schwellwert 24 übersteigt und als Reflexion 32 an der Füllgutoberfläche ermittelt werden kann. Der Schwellwert 24 kann durch die Steuereinheit 11 etwa basierend auf der aktuellen Sendeleistung, einer Formel, einem Modell und/oder einem Kennfeld berechnet und/oder in der Speichervorrichtung 14 hinterlegt werden.

Alternativ oder zusätzlich kann auch das Messsignal 30 und/oder das Empfangssignal basierend auf der aktuellen Sendeleistung durch die Steuereinheit 11 erhöht werden, so dass die Reflexion 32 den Schwellwert 23 erreicht und/oder übersteigt und so als Reflexion 32 der Füllgutoberfläche erkannt wird.

Figur 3 illustriert ein mit einem erfindungsgemäßen Radar-Füllstandmessgerät 10 ermitteltes Messsignal 30 mit einer Störsignalausblendung 25. Insbesondere illustriert Figur 3 eine Signalauswertung des Messsignals 30 basierend auf der Störsignalausblendung 25. Analog der Figur 2 kann das Messsignal 30 eine digitale Repräsentation des Empfangssignals, d.h. eine Echokurve 30, sein, wie sie in der Steuereinheit 11 und/oder in der Speichervorrichtung 14 des Radar-Füllstandmessgeräts 10 nach der A/D-Wandlung vorliegen kann. Die x-Achse 22 repräsentiert dabei eine Zeitachse 22, d.h. eine Signallaufzeit des Sende- und/oder Empfangssignals, und die y-Achse 21 repräsentiert eine Signalstärke 21 und/oder Amplitude 21 des Messsignals 30. Die Zeitachse 21 korreliert dabei mit einem Abstand zu dem Füllstandmessgerät 10, so dass basierend auf dem Messsignal 30 der Füllstand ermittelt werden kann.

Die Störsignalausblendung 25 kann etwa ein Störstellenprofil und/oder ein Behälterleerprofil umfassen. Beispielsweise kann die Störsignalausblendung 25 hierzu einen Parametersatz von Auswerteparametern aufweisen, welche in der Speichereinheit 14 hinterlegt sein können. Die Auswerteparameter der Störsignalausblendung können etwa jeweils einem Zeitintervall entsprechen, und die Werte der jeweiligen Auswerteparameter können einer Amplitude und/oder einer Signalstärke des Messsignals 30 in diesem Zeitintervall entsprechen. Die Störsignalausblendung 25 kann somit einen Kurvenzug 25 bilden, mit welchem das Messsignal 30 zur Ermittlung des Füllstandes verglichen werden kann.

In Figur 3 ist eine Reflexion 31 der Antenne 15 und eine Störreflexion 33, gezeigt, welche durch Behältereinbauten hervorgerufen sein kann. Weiter ist in Figur 3 eine Reflexion 32 an der Füllgutoberfläche gezeigt, welche anhand der Störsignalausblendung 25 identifiziert werden kann. Beispielsweise kann die Steuereinheit 11 dazu eingerichtet sein, die Reflexionen 31 und 33 zu verwerfen, wenn sie die Werte der Störsignalausblendung 25 nicht überschreiten. Ferner kann die Steuereinheit 11 dazu eingerichtet sein, die Reflexion 32 als von der Füllgutoberfläche stammende Reflexion 32 zu identifizieren, wenn die Reflexion 32 die Werte der Störsignalausblendung 25 überschreitet. Derart kann der Füllstand zuverlässig ermittelt werden. Die Störsignalausblendung 25 kann etwa aus dem empfangenen Messsignal einer Referenzmessung, z.B. mittels eines Filters, berechnet werden. Hierbei wird bei einem definierten Füllstand, vorzugsweise einem leeren Behälter, der Behälter und dessen Reflexionen vermessen. Ferner ist bei der Referenzmessung die Sendeleistung des Radar-Füllstandmessgeräts 10 bekannt.

Figur 4 illustriert eine Variation, Veränderung und/oder Anpassung der Störsignalausblendung 25 aus Figur 3 durch die Steuereinheit 11 des Radar-Füllstandmessgeräts in Abhängigkeit der Sendeleistung des Sendesignals. Analog der Figur 3 zeigen die einzelnen Peaks 31, 32, 33 im Messsignal 30, welches basierend auf einem Sendesignal mit einer ersten Sendeleistung und/oder einem Empfangssignal mit einer ersten Empfangsleistung ermittelt wurde, eine Reflexion 31 der Antenne 15, eine Reflexion 33 an einem Störobjekt und eine Reflexion 32 an der Füllgutoberfläche. Weiter zeigt Figur 4 ein zweites Messsignal 30', welches basierend auf einem Sendesignal mit einer zweiten Sendeleistung und/oder einem Empfangssignal mit einer zweiten Empfangsleistung ermittelt wurde. Die zweite Sendeleistung ist dabei größer als die erste Sendeleistung, so dass die Amplituden der Reflexionen 36, 37, 38 des zweiten Messsignals 30' jeweils größer als die Amplituden der Reflexionen 31, 32, 33 des ersten Messsignals 30 sind. Dabei überschreiten die Reflexionen 36 und 38 des zweiten Messsignals 30', d.h. bei der höheren Sendeleistung, Werte der Störsignalausblendung 25. Die Steuereinheit 11 könnte somit die Reflexionen 36, 38 als von der Füllgutoberfläche stammend identifizieren.

Um eine Fehlmessung des Füllstandes zu vermeiden, ist die Steuereinheit 11 dazu eingerichtet, die aktuelle Sendeleistung zu ermitteln, etwa basierend auf einer Abfrage der Sendeleistung von der Sendeeinheit 12. Auch kann die Steuereinheit 11 die Sendeleistung selbst vorgeben. Die Steuereinheit 11 ist ferner dazu eingerichtet, basierend auf der ermittelten Sendeleistung, Werte der Auswerteparameter, d.h. Werte der Störsignalausblendung 25 anzupassen und/oder zu verändern. In dem in Figur 4 gezeigten Beispiel ermittelt die Steuereinheit etwa Werte einer weiteren und/oder aktuellen Störsignalausblendung 26, um der erhöhten Sendeleistung Rechnung zu tragen und/oder diese zu berücksichtigen. Mit anderen Worten kann die Steuereinheit 11 bzw. die Auswerteelektronik die Störsignalausblendung 25 an die variierte Sendeleistung des Radar-Füllstandmessgeräts 10 anpassen, was zu einer berechneten, aktuellen Störsignalausblendung 26 führt. Bei der Störsignalausblendung 26 erreicht und/oder überschreitet nur die Reflexion 37 der Füllgutoberfläche Werte der Störsignalausblendung 26, wohingegen die Reflexionen 36, 38 diese unterschreiten und daher nicht als Reflexionen an der Füllgutoberfläche identifiziert werden. Somit kann der Füllstand zuverlässig ermittelt werden.

Alternativ oder zusätzlich zur Variation der Störsignalausblendung 25 kann auch das durch die Empfangseinheit empfangene Empfangssignal und/oder das damit korrelierende Messsignal 30 entsprechend der aktuellen Sendeleistung variiert und/oder angepasst werden. Im Beispiel der Figur 4 kann etwa das Messsignal 30' bei der höheren Sendeleistung skaliert und/oder verschoben werden, um das Messsignal 30 zu liefern, welches dann mit den Werten der Störsignalausblendung 25 verglichen werden kann.

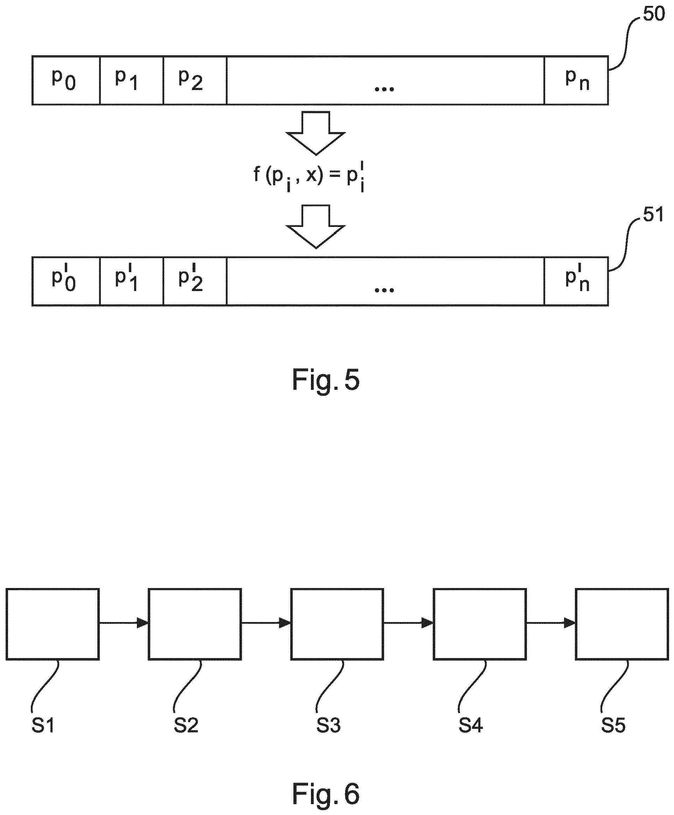

Die erste Störsignalausblendung 25 kann z.B. bei leerem Behälter und minimaler Sendeleistung bestimmt werden. Die berechnete Störsignalausblendung 26 kann beispielsweise anhand eines bekannten Verhaltens, Zusammenhangs und/oder einer Formel zwischen minimaler und maximaler Sendeleistung ermittelt werden. Es kann zwischen minimaler und maximaler Sendeleistung beispielsweise ein gewisser Amplitudenunterschied im Messsignal, etwa ein Unterschied von 3dB, auftreten. Sofern derartige Parameter und/oder ein derartiges Verhalten der Sende- und Empfangseinheit 12, 13 bekannt sind, z.B. durch Messungen und/oder Modellierung der Schaltung, kann eine angepasste Störsignalausblendung 26 berechnet werden. So können Werte der Auswerteparameter etwa basierend auf einer mathematischen Formel, einem Modell und/oder einem Kennfeld, welche den Zusammenhang der Werte der Auswerteparameter und der Sendeleistung repräsentieren und/oder angeben kann, mit der aktuellen Sendeleistung als Eingangsgröße für die aktuelle Sendeleistung ermittelt werden, wie in Figur 5 illustriert.

Zudem kann die Störsignalausblendung 26 durch eine zweite Referenzmessung bei einer zweiten Sendeleistung ermittelt werden. Die erste Sendeleistung kann dabei einer minimalen Sendeleistung entsprechen, und die zweite Sendeleistung kann einer maximalen Sendeleistung entsprechen. Die Steuereinheit 11 kann dann basierend auf einer Interpolation und/oder Skalierung zwischen den Werten der ersten Störsignalausblendung 25 und den Werten der zweiten Störsignalausblendung 26 Werte der Störsignalausblendung für eine aktuelle Sendeleistung ermitteln. Die Interpolation kann beispielsweise linear, quadratisch, logarithmisch oder exponentiell, jeweils proportional oder indirekt proportional, zu der Sendeleistung erfolgen. Auch kann die Steuereinheit 11 die Störsignalausblendung durch eine Verschiebung und/oder Skalierung verändern .

Die Bestimmung der Störsignalausblendung 25 kann etwa bei Inbetriebnahme des Radar-Füllstandmessgeräts 10 erfolgen. Diese kann durch die Steuereinheit 11 des Radar-Füllstandmessgeräts 10 automatisiert durchgeführt werden und/oder durch eine Benutzereingabe, etwa durch einen Tastendruck und/oder Betätigung eines Bedienelements des Füllstandmessgeräts 10, initiiert werden. Ferner kann die Steuereinheit 11 dazu ausgeführt sein, periodisch die Referenzmessung der Störsignalausblendung zu wiederholen, z.B. immer wenn der Behälter leer ist oder einen geringen Füllstand aufweist. Mit anderen Worten kann ein Erreichen und/oder Unterschreiten eines gewissen Füllstandes, insbesondere eines minimalen Füllstandes, die Referenzmessung für die Störsignalausblendung triggern und/oder auslösen. Die so bestimmte Störsignalausblendung 25 bzw. die Störsignalausblendungen können in einer Speichereinheit 14 des Radar-Füllstandmessgeräts 10 gespeichert bzw. hinterlegt werden. Durch das Bestimmen der Störsignalausblendung bei minimaler als auch bei maximaler Sendeleistung kann auf jede Sendeleistung entsprechend reagiert werden, bzw. kann die Störsignalausblendung entsprechend variiert, angepasst oder verändert werden. Wird z.B. nur mit 50% der maximalen Sendeleistung gesendet, so kann die heranzuziehende Störsignalausblendung 26 aus dem Mittelwert der ersten Störsignalausblendung 25 und der zweiten Störsignalausblendung 26 berechnet werden.

Es sei angemerkt, dass auch komplexere Zusammenhänge zwischen Sendeleistung und Störsignalausblendung durch die Steuereinheit 11 berücksichtigt werden können, beispielsweise durch ein Kennfeld oder eine Funktion, die Werte der Störsignalausblendung bei einer ersten Sendeleistung und/oder einer zweiten Sendeleistung in Werte der Störsignalausblendung bei der aktuellen Sendeleistung überführt. Die aktuelle Störsignalausblendung kann aus der wenigstens einen Referenzmessung und/oder mit Hilfe eines mathematischen Modells bzw. einer Formel erzeugt werden. Die Funktion kann hierbei auch eine nichtlineare Funktion sein. Auch können verschiedene Funktionen abhängig von den Umgebungsbedingungen, wie z.B. Druck, Temperatur, Luftfeuchte und/oder Gaszusammensetzung, hinterlegt sein. Mit anderen Worten kann die Steuereinheit 11 zur Ermittlung des Wertes des wenigstens einen Auswerteparameters und/oder zur Ermittlung der Werte der Störsignalausblendung auch andere Einflussgrößen wie Druck, Temperatur, Luftfeuchte und/oder Gaszusammensetzung in dem Behälter berücksichtigen.

Figur 5 illustriert eine Variation von Werten von Auswertparametern durch ein Radar-Füllstandmessgerät 10 gemäß einem Ausführungsbeispiel der Erfindung.

Ein erster Auswerteparametersatz 50 mit Werten pᵢ i=1...n der Auswerteparameter wird dabei durch die Steuereinheit 11 mittels einer Funktion f, welche die aktuelle Sendeleistung x sowie die Parameter des Auswerteparametersatzes 50 als Eingangsgrößen erhält, in einen zweiten Auswerteparametersatz 51 mit Werten pᵢ' i=1...n der Auswerteparameter überführt. Die Werte p₀, p₁, p₂, ..., pₙ der einzelnen Auswerteparameter können dabei alle mit derselben Funktion f oder zumindest können Teile der Auswerteparameter mit unterschiedlichen Funktionen f variiert werden, sodass die Variation und/oder der relative Unterschied zwischen beispielsweise p₀ zu p'₀ und p₁ zu p'₁ nicht zwingend identisch sein muss. Es sei angemerkt, dass die Funktion auch von weiteren Variablen abhängen kann, wie z.B. Temperatur, Luftfeuchte, Druck und/oder Gaszusammensetzung in dem Behälter.

Figur 6 zeigt ein Flussdiagramm zur Illustration von Schritten eines Verfahrens zum Betreiben eines Radar-Füllstandmessgerätes 10 gemäß einer Ausführungsform der Erfindung.

Das Radar-Füllstandmessgerät 10 kann dabei ein wie in voranstehenden Figuren beschriebenes Radar-Füllstandmessgerät 10 sein.

In einem ersten Schritt S1 wird die Sendeleistung der Sendeeinheit 12 des Radar-Füllstandmessgeräts 10 ermittelt. In einem weiteren Schritt S2 wird mit der zuvor ermittelten Sendeleistung durch die Sendeeinheit 12 ein Sendesignal, insbesondere ein Radarsendesignal, in Richtung des Mediums ausgesendet. Das ausgesendete Signal wird an der Oberfläche des Mediums reflektiert und in Schritt S3 von der Empfangseinheit 13 des Radar-Füllstandmessgeräts 10 empfangen. In Schritt S4 erfolgt ein Berechnen, Ermitteln, Verändern, Variieren und/oder Anpassen wenigstens eines Wertes eines Auswerteparameters und/oder eines mit dem Empfangssignal korrelierenden Messsignals basierend auf der ermittelten Sendeleistung der Sendeeinheit 12. Die Ermittlung des Füllstandes des Mediums basierend auf dem Empfangssignal und/oder basierend auf dem variierten Wert des wenigstens eines Auswerteparameters erfolgt in Schritt S5. Dadurch wird die Auswertung eines Messsignals eines Radar-Füllstandmessgeräts vereinfacht sowie die Qualität der Messung verbessert.

Die voranstehend erläuterte Reihenfolge der einzelnen Schritte ist nur exemplarisch zu werten. Einzelne Schritte können zudem parallel ablaufen.

Alternativ oder zusätzlich können die folgenden Schritte im Rahmen des Verfahrens zum Betreiben des Radar-Füllstandmessgeräts 10 durchlaufen werden. Das Radar-Füllstandmessgerät kann in einem Schritt in Betrieb genommen werden und es kann ein Messsignal der Referenzmessung, d.h. eine Störsignalausblendung, gespeichert werden. Anschließend kann ein Messzyklus durchlaufen werden und der aktuelle Sendepegel kann ermittelt werden. Das Sendesignal kann gesendet und das Empfangssignal kann empfangen werden. Werte der Störsignalausblendung und/oder wenigstens ein Schwellwert kann basierend auf der ermittelten Sendeleistung berechnet werden Das Empfangssignal kann in ein digitales Messsignal gewandelt werden und mit berechneten Werten der Störsignalausblendung und/oder mit dem wenigstens einen Schwellenwert verglichen werden. Anschließend kann der Füllstand aus dem empfangenem Messsignal, der angepassten Störsignalausblendung und/oder dem Schwellwert ermittelt werden.

Wie voranstehend erläutert, können nicht nur Parameter und Kurvenzüge an den Sendepegel angepasst werden, sondern auch Werte und Größen, die sich aus dem empfangen Messsignal, d.h. dem Empfangssignal und/oder dem Messsignal, selbst ableiten lassen. Füllstandmessgeräte können z.B. die Amplituden der Reflexionen im Behälter mitprotokollieren. Insbesondere die Amplitude der Reflexion der Mediumoberfläche gibt Aufschluss darüber, ob das Füllstandmessgerät 10 die aktuelle Messsituation ausreichend genau erfasst oder ob sich die Prozessbedingungen verschlechtert haben. Die Amplitude wird z.B. über den Ort aufgetragen, um so ein Amplitudenprofil der Reflexion des Füllstandes im ganzen Tank zu erhalten mit dem dann die Amplitude der Reflexion des Füllstandes der aktuellen Messung verglichen werden kann. Um diesen Schritt, d.h. Vergleichen der Amplitude der Messung mit Amplituden vorangegangener Messungen, vollziehen zu können, sollte der Sendepegel gleichbleiben oder erfindungsgemäß die Amplitude der Reflexion oder das Amplitudenprofil selbst nachgerechnet werden.

Ähnlich sieht es bei der Anwendung von Tracking-Verfahren aus. Bei diesen spurbildenden Verfahren können alle Reflexionen im aktuellen Messsignal mit den Reflexionen vorheriger Messungen verglichen werden. Dabei werden alle Reflexionen desselben Ursprungs einer Spur, d.h. einem Track, zugeordnet, indem die Amplitude und Position der Reflexion mit vorherigen Messungen verglichen werden. Erfolgt nun eine Anpassung des Sendepegels, kann dies auch beim Tracking berücksichtigt werden, damit die Reflexion weiterhin dem Track zugeordnet werden kann.

Um externe Störungen auf dem empfangenen Messsignal zu unterdrücken, werden aufeinanderfolgende Messsignale unterschiedlicher Messungen gemittelt und dann nur der resultierende Scharmittelwert der Signalauswertung unterzogen. Eine Anpassung des Sendepegels wirkt sich somit auch auf die Scharmittelung aus. So kann die Stärke der Mittelung, z.B. ein Faktor einer Rekursion, mit dem Sendepegel variiert werden.

Ergänzend sei daraufhingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Radar-Füllstandmessgerät (10) zum Ermitteln eines Füllstandes eines Mediums, das Radar-Füllstandmessgerät (10) aufweisend:
eine Sendeeinheit (12) zum Senden eines Sendesignals in Richtung des Mediums;
eine Empfangseinheit (13) zum Empfangen eines an dem Medium reflektierten Empfangssignals; und
eine Steuereinheit (11), welche dazu eingerichtet ist, basierend auf dem Empfangssignal und basierend auf wenigstens einem Auswerteparameter den Füllstand des Mediums zu ermitteln;
wobei das Radar-Füllstandmessgerät (10) dazu eingerichtet ist, eine Sendeleistung des Sendesignals zu variieren;
wobei die Steuereinheit (11) dazu eingerichtet ist, eine aktuelle Sendeleistung des Sendesignals zu ermitteln;
**dadurch gekennzeichnet,**
**dass** die Steuereinheit (11) dazu eingerichtet ist, zur Ermittlung des Füllstandes einen Wert des wenigstens einen Auswerteparameters basierend auf der ermittelten, aktuellen Sendeleistung zu variieren, sodass der Füllstand unter Berücksichtigung der Sendeleistung ermittelt wird.

2. Radar-Füllstandmessgerät (10) nach Anspruch 1,
wobei der wenigstens eine Auswerteparameter einen Schwellwert (23, 24) für eine Amplitude eines mit dem Empfangssignal korrelierenden Messsignals (30) umfasst, und
wobei die Steuereinheit (11) dazu eingerichtet ist, den Schwellwert (23, 24) basierend auf der ermittelten, aktuellen Sendeleistung zu ermitteln und/oder zu variieren.
CGS:CHP

3. Radar-Füllstandmessgerät (10) nach einem der voranstehenden Ansprüche,
wobei die Steuereinheit (11) dazu eingerichtet ist, den Füllstand des Mediums basierend auf mehreren Auswerteparametern zu ermitteln; und
wobei die Steuereinheit (11) dazu eingerichtet ist, zur Ermittlung des Füllstandes einen Wert jedes Auswerteparameters basierend auf der ermittelten, aktuellen Sendeleistung zu ermitteln und/oder zu variieren.

4. Radar-Füllstandmessgerät (10) nach einem der voranstehenden Ansprüche,
wobei die Steuereinheit (11) dazu eingerichtet ist, den Wert des wenigstens einen Auswerteparameters linear oder logarithmisch mit der Sendeleistung zu variieren; und/oder
wobei die Steuereinheit (11) dazu eingerichtet ist, wenigstens ein mit dem Empfangssignal korrelierendes Messsignal (30) linear oder logarithmisch mit der Sendeleistung zu variieren.

5. Radar-Füllstandmessgerät (10) gemäß einem der voranstehenden Ansprüche,
wobei der wenigstens eine Auswerteparameter eine Störsignalausblendendung (25, 26) umfasst, welche Informationen bezüglich einer Lage von Störobjekten aufweist.

6. Radar-Füllstandmessgerät (10) nach Anspruch 5,
wobei die Störsignalausblendung (25, 26) ein Störechoprofil aufweist, welches mit der Lage von Störobjekten korreliert; und/oder
wobei die Störsignalausblendung (25, 26) ein Behälterleerprofil aufweist, welches mit einer Geometrie eines Behälters für das Medium korreliert.

7. Radar-Füllstandmessgerät (10) nach einem der voranstehenden Ansprüche,
wobei die Steuereinheit (11) dazu eingerichtet ist, einen Referenzwert des wenigstens einen Auswerteparameters durch wenigstens eine Referenzmessung bei einer vorbestimmten Sendeleistung zu ermitteln; und
wobei die Steuereinheit (10) dazu eingerichtet ist, einen funktionalen Zusammenhang zwischen Werten des wenigstens einen Auswerteparameters und der Sendeleistung basierend auf der wenigstens einen Referenzmessung zu ermitteln.

8. Radar-Füllstandmessgerät (10) nach einem der voranstehenden Ansprüche,
wobei die Steuereinheit (11) dazu eingerichtet ist, einen ersten Referenzwert des wenigstens einen Auswerteparameters durch eine erste Referenzmessung mit einer ersten Sendeleistung zu ermitteln;
wobei die Steuereinheit (11) dazu eingerichtet ist, einen zweiten Referenzwert des wenigstens einen Auswerteparameters durch eine zweite Referenzmessung mit einer zweiten Sendeleistung zu ermitteln, welche sich von der ersten Sendeleistung unterscheidet; und
wobei die Steuereinheit (11) dazu eingerichtet ist, einen funktionalen Zusammenhang zwischen Werten des wenigstens einen Auswerteparameters und der Sendeleistung basierend auf der ersten Referenzmessung und der zweiten Referenzmessung zu ermitteln.

9. Radar-Füllstandmessgerät (10) nach Anspruch 8,
wobei die erste Sendeleistung eine maximale Sendeleistung ist; und/oder
wobei die zweite Sendeleistung eine minimale Sendeleistung ist.

10. Radar-Füllstandmessgerät (10) nach einem der voranstehenden Ansprüche,
wobei das Radar-Füllstandmessgerät (10) dazu eingerichtet ist, die Sendeleistung des Sendesignals basierend auf einem zeitlich vorhergehenden Empfangssignal zu variieren.

11. Radar-Füllstandmessgerät (10) nach einem der voranstehenden Ansprüche,
wobei das Radar-Füllstandmessgerät (10) dazu eingerichtet ist, die Sendeleistung des Sendesignals kontinuierlich oder schrittweise zwischen einer minimalen Sendeleistung und einer maximalen Sendeleistung zu variieren.

12. Radar-Füllstandmessgerät (10) nach einem der voranstehenden Ansprüche,
wobei die Steuereinheit (11) dazu eingerichtet ist, die Sendeleistung durch Übermittlung eines Steuersignals an die Sendeeinheit (12) zu variieren; und/oder
wobei die Steuereinheit (11) dazu eingerichtet ist, die Sendeleistung durch eine Abfrage von der Sendeeinheit (12) zu ermitteln.

13. Verfahren zum Betreiben eines Radar-Füllstandmessgeräts (10), das Verfahren aufweisend die Schritte:
Ermitteln (S1) einer Sendeleistung einer Sendeeinheit (12) des Radar-Füllstandmessgeräts (10);
Senden (S2), mit der Sendeeinheit (12), eines Sendesignals mit der ermittelten Sendeleistung in Richtung eines Mediums;
Empfangen (S3), mit einer Empfangseinheit (13) des Radar-Füllstandmessgeräts (10), eines an dem Medium reflektierten Empfangssignals;
das Verfahren ist **gekennzeichnet durch**:
Variieren (S4), basierend auf der ermittelten Sendeleistung, eines Wertes (23, 24) wenigstens eines Auswerteparameters; und
Ermitteln (S5) eines Füllstandes des Mediums basierend auf dem Empfangssignal und basierend auf dem variierten Wert (24) des wenigstens einen Auswerteparameters.

14. Programmelement, das, wenn es auf einer Steuereinheit (11) eines Radar-Füllstandmessgerätes (10) ausgeführt wird, das Radar-Füllstandmessgerät (10) anleitet, die Schritte des Verfahrens nach Anspruch 13 auszuführen.

15. Computerlesbares Medium, auf dem ein Programmelement nach Anspruch 14 gespeichert ist.

## Claims

1. Radar fill level measurement device (10) for determining a fill level of a medium, the radar fill level measurement device (10) comprising:
a transmitting unit (12) for transmitting a transmission signal towards the medium;
a receiving unit (13) for receiving a reception signal reflected by the medium; and
a control unit (11), which is configured to determine the fill level of the medium based on the reception signal and based on at least one evaluation parameter;
wherein the radar fill level measurement device (10) is configured to vary a transmitting power of the transmission signal;
wherein the control unit (11) is configured to determine a current transmitting power of the transmission signal;
**characterized in that**
the control unit (11) is configured to vary, based on the determined current transmitting power, a value of the at least one evaluation parameter to determine the fill level, such that the fill level is determined taking into account the transmitting power.

2. Radar fill level measurement device (10) according to claim 1,
wherein the at least one evaluation parameter includes a threshold value (23, 24) for an amplitude of a measurement signal (30) that correlates with the reception signal, and
wherein the control unit (11) is configured to determine and/or to vary the threshold value (23, 24) based on the determined current transmitting power.

3. Radar fill level measurement device (10) according to any of the preceding claims,
wherein the control unit (11) is configured to determine the fill level of the medium based on a plurality of evaluation parameters; and
wherein the control unit (11) is configured to determine and/or to vary, based on the determined current transmitting power and in order to determine the fill level, a value of each evaluation parameter.

4. Radar fill level measurement device (10) according to any of the preceding claims, wherein the control unit (11) is configured to vary the value of the at least one evaluation parameter linearly or logarithmically with the transmitting power; and/or
wherein the control unit (11) is configured to vary at least one measurement signal (30) that correlates with the reception signal linearly or logarithmically with the transmitting power.

5. Radar fill level measurement device (10) according to any of the preceding claims,
wherein the at least one evaluation parameter includes an interfering signal suppression (25, 26), which comprises information relating to a position of interfering objects.

6. Radar fill level measurement device (10) according to claim 5,
wherein the interfering signal suppression (25, 26) comprises a clutter profile, which correlates with the position of interfering objects; and/or
wherein the interfering signal suppression (25, 26) comprises an empty container profile, which correlates with a geometry of a container for the medium.

7. Radar fill level measurement device (10) according to any of the preceding claims,
wherein the control unit (11) is configured to determine a reference value of the at least one evaluation parameter by means of at least one reference measurement at a predetermined transmitting power; and
wherein the control unit (10) is configured to determine a functional relationship between values of the at least one evaluation parameter and the transmitting power based on the at least one reference measurement.

8. Radar fill level measurement device (10) according to any of the preceding claims,
wherein the control unit (11) is configured to determine a first reference value of the at least one evaluation parameter based on a first reference measurement at a first transmitting power;
wherein the control unit (11) is configured to determine a second reference value of the at least one evaluation parameter based on a second reference measurement at a second transmitting power, which is different from the first transmitting power; and
wherein the control unit (11) is configured to determine a functional relationship between values of the at least one evaluation parameter and the transmitting power based on the first reference measurement and the second reference measurement.

9. Radar fill level measurement device (10) according to claim 8,
wherein the first transmitting power is a maximum transmitting power; and/or
wherein the second transmitting power is a minimum transmitting power.

10. Radar fill level measurement device (10) according to any of the preceding claims,
wherein the radar fill level measurement device (10) is configured to vary the transmitting power of the transmission signal based on a temporally preceding reception signal.

11. Radar fill level measurement device (10) according to any of the preceding claims,
wherein the radar fill level measurement device (10) is configured to vary the transmitting power of the transmission signal in a continuous or stepwise manner between a minimum transmitting power and a maximum transmitting power.

12. Radar fill level measurement device (10) according to any of the preceding claims,
wherein the control unit (11) is configured to vary the transmitting power by transmitting a control signal to the transmitting unit (12); and/or
wherein the control unit (11) is configured to determine the transmitting power by querying the transmitting unit (12).

13. Method for operating a radar fill level measurement device (10), the method comprising the steps of:
determining (S1) a transmitting power of a transmitting unit (12) of the radar fill level measurement device (10);
transmitting (S2), by means of the transmitting unit (12), a transmission signal at the determined transmitting power towards a medium;
receiving (S3), by means of a receiving unit (13) of the radar fill level measurement device (10), a reception signal reflected by the medium;
the method being **characterized by**
varying (S4), based on the determined transmitting power, a value (23, 24) of at least one evaluation parameter; and
determining (S5) a fill level of the medium based on the reception signal and based on the varied value (24) of the at least one evaluation parameter.

14. Program element which, when executed by a control unit (11) of a radar fill level measurement device (10), instructs the radar fill level measurement device (10) to carry out the steps of the method according to claim 13.

15. Computer-readable medium on which a program element according to claim 14 is stored.

## Revendications

1. Dispositif de mesure du niveau de remplissage par radar (10) pour déterminer le niveau de remplissage d'un milieu, le dispositif de mesure du niveau de remplissage par radar (10) comprenant :
une unité de transmission (12) pour transmettre un signal de transmission vers le médium;
une unité de réception (13) pour recevoir un signal de réception réfléchi par le médium; et
une unité de contrôle (11), qui est configurée pour déterminer le niveau de remplissage du milieu sur la base du signal de réception et sur la base d'au moins un paramètre d'évaluation ;
dans lequel le dispositif de mesure du niveau de remplissage par radar (10) est configuré pour faire varier une puissance d'émission du signal de transmission ;
dans lequel l'unité de contrôle (11) est configurée pour déterminer une puissance d'émission actuelle du signal de transmission;
**caractérisé en ce que**
l'unité de contrôle (11) est configurée pour faire varier, sur la base de la puissance d'émission actuelle déterminée une valeur d'au moins un paramètre d'évaluation pour déterminer le niveau de remplissage, de telle sorte que le niveau de remplissage soit déterminé en tenant compte de la puissance d'émission.

2. Dispositif de mesure du niveau de remplissage par radar (10) selon la revendication 1,
dans lequel le au moins un paramètre d'évaluation comprend une valeur de seuil (23, 24) pour une amplitude d'un signal de mesure (30) qui est en corrélation avec le signal de réception, et
dans lequel l'unité de contrôle (11) est configurée pour déterminer et/ou faire varier la valeur seuil (23, 24) sur la base de la puissance d'émission actuelle déterminée.

3. Dispositif de mesure du niveau de remplissage par radar (10) selon l'une quelconque des revendications précédentes,
dans lequel l'unité de contrôle (11) est configurée pour déterminer le niveau de remplissage du médium sur la base d'une pluralité de paramètres d'évaluation; et
dans laquelle l'unité de contrôle (11) est configurée pour déterminer et/ou faire varier, en fonction de la puissance d'émission actuelle déterminée et afin de déterminer le niveau de remplissage, une valeur de chaque paramètre d'évaluation.

4. Dispositif de mesure du niveau de remplissage par radar (10) selon l'une quelconque des revendications précédentes,
dans lequel l'unité de contrôle (11) est configurée pour faire varier la valeur d'au moins un paramètre d'évaluation de manière linéaire ou logarithmique avec la puissance d'émission ; et/ou
dans lequel l'unité de contrôle (11) est configurée pour faire varier le au moins un signal de mesure (30) qui est en corrélation avec le signal de réception de manière linéaire ou logarithmique avec la puissance d'émission.

5. Dispositif de mesure du niveau de remplissage par radar (10) selon l'une quelconque des revendications précédentes,
dans lequel le au moins un paramètre d'évaluation comprend une suppression de signal d'interférence (25, 26), qui comprend des informations relatives à une position d'objets interférents.

6. Dispositif de mesure du niveau de remplissage par radar (10) selon la revendication 5,
dans lequel la suppression de signal d'interférence (25, 26) comprend un profil d'interférence, qui est en corrélation avec la position des objets interférents ; et/ou
où la suppression de signal d'interférence (25, 26) comprend un profil de conteneur vide, qui est en corrélation avec une géométrie de conteneur pour le médium.

7. Dispositif de mesure du niveau de remplissage par radar (10) selon l'une quelconque des revendications précédentes,
dans lequel l'unité de contrôle (11) est configurée pour déterminer une valeur de référence du au moins un paramètre d'évaluation au moyen d'au moins une mesure de référence à une puissance d'émission prédéterminée ; et
dans lequel l'unité de contrôle (10) est configurée pour déterminer une relation fonctionnelle entre les valeurs d'au moins un paramètre d'évaluation et la puissance d'émission sur la base d'au moins une mesure de référence.

8. Dispositif de mesure du niveau de remplissage par radar (10) selon l'une quelconque des revendications précédentes,
dans lequel l'unité de contrôle (11) est configurée pour déterminer une première valeur de référence d'au moins un paramètre d'évaluation au moyen d'une première mesure de référence à une première puissance d'émission ;
dans lequel l'unité de contrôle (11) est configurée pour déterminer une deuxième valeur de référence du au moins un paramètre d'évaluation au moyen d'une deuxième mesure de référence à une deuxième puissance d'émission, qui est différente de la première puissance d'émission ; et
dans lequel l'unité de contrôle (11) est configurée pour déterminer une relation fonctionnelle entre les valeurs d'au moins un paramètre d'évaluation et la puissance d'émission sur la base de la première mesure de référence et de la deuxième mesure de référence.

9. Dispositif de mesure du niveau de remplissage par radar (10) selon la revendication 8,
où la première puissance d'émission est une puissance d'émission maximale ; et/ou
où la deuxième puissance d'émission est une puissance d'émission minimale.

10. Dispositif de mesure du niveau de remplissage par radar (10) selon l'une quelconque des revendications précédentes,
dans lequel le dispositif de mesure du niveau de remplissage par radar (10) est configuré pour faire varier la puissance d'émission du signal de transmission sur la base d'un signal de réception précédent.

11. Dispositif de mesure du niveau de remplissage par radar (10) selon l'une quelconque des revendications précédentes,
dans lequel le dispositif de mesure du niveau de remplissage par radar (10) est configuré pour faire varier la puissance d'émission du signal de transmission de manière continue ou séquentielle entre une puissance d'émission minimale et une puissance d'émission maximale.

12. Dispositif de mesure du niveau de remplissage par radar (10) selon l'une quelconque des revendications précédentes,
dans lequel l'unité de contrôle (11) est configurée pour faire varier la puissance d'émission en émettant un signal de contrôle à l'unité de transmission (12) ; et/ou
dans lequel l'unité de contrôle (11) est configurée pour déterminer la puissance d'émission avec un appel de l'unité de transmission (12).

13. Procédé de fonctionnement d'un dispositif de mesure du niveau de remplissage par radar (10), le procédé comprenant les étapes suivantes
déterminer (S1) une puissance d'émission d'une unité de transmission (12) du dispositif de mesure du niveau de remplissage par radar (10) ;
transmettre (S2), au moyen de l'unité de transmission (12), un signal de transmission à la puissance d'émission déterminée vers un médium ;
réception (S3), au moyen d'une unité de réception (13) du dispositif de mesure du niveau de remplissage par radar (10), d'un signal de réception réfléchi par le médium;
la méthode est **caractérisée par**
faire varier (S4), sur la base de la puissance d'émission déterminée, une valeur (23, 24) d'au moins un paramètre d'évaluation
déterminer (S5) un niveau de remplissage du médium sur la base du signal de réception et sur la base de la valeur variée (24) du au moins un paramètre d'évaluation.

14. Élément de programme qui, lorsqu'il est exécuté sur une unité de commande (11) d'un dispositif de mesure du niveau de remplissage par radar (10), instruit le dispositif de mesure du niveau de remplissage par radar (10) d'exécuter les étapes du procédé selon la revendication 13.

15. Support lisible par ordinateur sur lequel est stocké un élément de programme selon la revendication 14.
